# EUROPÄISCHE PATENTSCHRIFT

(11) **EP 2 804 252 B1**
(45) Veröffentlichungstag und Bekanntmachung des Hinweises auf die Patenterteilung: **14.06.2017**
(21) Anmeldenummer: 14164527.5
(22) Anmeldetag: 14.04.2014
(51) Int. Cl.: H01M 2/20, H01M 16/00, B60L 11/18

(54) **Batteriebaugruppe einer Batterie mit zwei verschiedenen Zellarten**
Battery group of a battery with two different cell types
Groupe d'une batterie avec deux types différents de cellules de la batterie

(30) Priorität: 16.05.2013 DE 102013209069
(43) Veröffentlichungstag der Anmeldung: 19.11.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: Kohlberger, Markus, 70174 Stuttgart (DE)
(74) Vertreter: Bee, Joachim

(56) Entgegenhaltungen:
- WO-A1-2008/121982
- CA-A1- 2 428 403
- DE-A1-102009 031 295
- DE-A1-102009 035 475
- DE-A1-102010 024 235
- US-A1- 2010 087 961
- Jaksch, Hans-Dieter: "Batterie-Lexikon", 1993, Richard Pflaum Verlag ISBN: 3-7905-0650-8 pages 131-132, * page 131, paragraph 4 - page 132, paragraph 2 *

## Beschreibung

Die vorliegende Erfindung betrifft eine Batteriebaugruppe, welche mindestens eine erste Zelleinheit einer ersten Zellenart und mindestens eine zweite Zelleinheit einer zweiten Zellenart aufweist, welche von der ersten Zelleinheit verschieden ist.

### Stand der Technik

In Hybrid-, Plug-in-Hybrid- und Elektrofahrzeugen kommen elektrische Energiespeicher zum Einsatz, um die nötige Energie für den Betrieb des Elektromotors des Elektrofahrzeugs, welcher den Antrieb desselben zumindest teilweise unterstützt, zu speichern. In den Fahrzeugen der neuesten Generation kommen hierbei sogenannte Lithium-Ionen-Batterien zum Einsatz. Im Jahre 2011 ist in Deutschland das Elektrofahrzeug iMiev mit solchen Lithium-Ionen-Batterien in den Handel gekommen.

Lithium-Ionen-Batteriezellen und -Batterien zeichnen sich unter anderem durch eine hohe Energiedichte und eine äußerst geringe Selbstentladung aus. Sie besitzen mindestens eine positive und eine negative Elektrode, welche auch als Kathode beziehungsweise als Anode bezeichnet werden, welche Lithium-Ionen (Li+) während der sogenannten Interkalation reversibel einlagern oder während der sogenannten Deinterkalation wieder auslagern können. Antriebsbatterien in Hybrid-, Plug-in-Hybrid- und Elektrofahrzeugen werden üblicherweise modular aufgebaut. Hierbei werden aus mindestens zwei Batteriezellen, welche seriell oder parallel verschaltet werden, Batteriemodule gebildet, welche wiederum zu größeren Untereinheiten, sogenannten Subunits zusammengefasst werden, die sich beispielsweise eine gemeinsame Kühleinrichtung teilen können. Zwei oder mehrere solcher Subunits können dann zu einer Batterie verschaltet werden, wobei die Subunits je nach Bauraum auch in mehreren Ebenen übereinander angeordnet werden können.

In der Praxis werden zum Teil Hochenergiezellen mit Doppelschichtkondensatoren in einem Energiespeicher kombiniert, welche in zwei verschiedenen, getrennten Baugruppen angeordnet sind. Die Doppelschichtkondensatoren fungieren dabei als Hochleistungszellen, welche zum kurzfristigen Bereitstellen von hohen Leistungen in der Lage sind. Ist die Kombination von Hochleistungszellen und Hochenergiezellen beispielsweise in einem Elektrofahrzeug verbaut, so dienen die Hochleistungszellen beispielsweise im Falle einer Beschleunigung des Elektrofahrzeugs zur Bereitstellung der für diese benötigten hohen Leistung, während die Hochenergiezellen zur Energiespeicherung der Energie dienen, welche für die Überwindung einer vorbestimmten Reichweite des Elektrofahrzeugs benötigt wird. Allerdings ist die Verschaltung von Hochenergie- und Hochleistungszellen innerhalb des Energiespeichers relativ aufwendig, insbesondere, da Zelleinheiten aus zwei verschiedenen Baugruppen miteinander verknüpft werden müssen.

Die Druckschrift DE 10 2010 024 235 A1 eine Akkumulatorzelle mit zumindest einer energieoptimierten Zelleneinheit und zumindest einer leistungsoptimierten Zelleneinheit, wobei die leistungsoptimierte Zelleneinheit so ausgestaltet ist, dass mit ihr eine höhere Leistung erzeugbar ist, als mit der energieoptimierten Zelleneinheit und wobei die energieoptimierte Zelleneinheit so ausgestaltet ist, dass mit ihr eine höhere Energiemenge pro Volumen der energieoptimierten Zelleneinheit und/oder pro Masse der energieoptimierten Zelleneinheit speicherbar ist als mit der leistungsoptimierten Zelleneinheit, und wobei die zumindest eine energieoptimierte Zelleneinheit und die zumindest eine leistungsoptimierte Zelleneinheit in einem gemeinsamen Zellengehäuse angeordnet sind.

### Offenbarung der Erfindung

Es wird eine Batteriebaugruppe zur Verfügung gestellt, welche mindestens eine erste Zelleinheit einer ersten Zellenart sowie einen ersten Anschluss umfasst, welcher mit einem Pol der ersten Zelleinheit verbunden ist. Erfindungsgemäß weist die Batteriebaugruppe mindestens eine zweite Zelleinheit einer zweiten Zellenart, welche von der ersten Zelleinheit verschieden ist sowie einen zweiten Anschluss auf, welcher mit einem Pol der zweiten Zelleinheit verbunden ist.

Der Vorteil einer derart ausgeführten Batteriebaugruppe ist, dass diese zwei verschiedene Zelleinheiten, also zum Beispiel sowohl Hochleistungszellen als auch Hochenergiezellen aufweisen kann, welche also in ein und der gleichen Batteriebaugruppe zum Einsatz kommen können. Durch den kombinierten Einsatz zweier verschiedener Zellenarten müssen, beispielsweise in einem elektrisch betriebenen Kraftfahrzeug, keine zwei Batteriebaugruppen verbaut werden, in welchen die beiden verschiedenen Zelleinheiten jeweils für sich, das heißt getrennt voneinander verbaut sind. Dadurch können Kosten und Bauraum eingespart werden. Ferner können von den verschiedenen Zelleinheiten unterschiedliche Aufgaben übernommen werden. Eine Zelleinheit kann dabei jede Art von Energiespeicher beziehungsweise Energielieferant sein, beispielsweise ein Elektrodenverbund, eine Batteriezelle, ein Batteriemodul, eine Batterie-Subunit, also eine Batterie-Untereinheit, welche sich aus mehreren Batteriemodulen zusammensetzt oder aber auch eine Batterie selbst sein. Der Begriff der Zellenart ist in diesem Zusammenhang auf die Ausprägung der Energiedichte beziehungsweise auf die Ausprägung der Leistungsdichte einer betrachteten Zelleinheit beziehungsweise auf das Verhältnis dieser Größen zueinander ausgerichtet, also auf das Verhältnis von Energiedichte zu Leistungsdichte der jeweiligen Zelleinheit. Unterscheiden sich Zelleinheiten also in ihrem jeweiligen Verhältnis von Energiedichte zu Leistungsdichte voneinander, so gehören sie nach der obigen Definition unterschiedlichen Zellenarten an. Ein unterschiedliches Verhältnis von Energiedichte zu Leistungsdichte zweier Zelleinheiten kann durch einen unterschiedlichen chemischen beziehungsweise physikalischen Aufbau der Zelleinheiten beziehungsweise eine unterschiedliche Ausgestaltung innerhalb der Zelleinheiten erreicht werden. So kann sich das Elektrodenensemble einer ersten Zelleinheit einer ersten Zellenart beispielsweise in der Beschichtungsdicke der Elektroden, in der Verdichtung, in dem Verhältnis von Aktivmaterial zu Binder, in der Art des verwandten Leitmaterials und/oder in der Art des verwandten Aktivmaterials von einer zweiten Zelleinheit einer zweiten Zellenart unterscheiden.

Erfindungsgemäß ist die erste Zelleinheit der ersten Zellenart eine Hochenergiezelleinheit und/oder ist die zweite Zelleinheit der zweiten Zellenart eine Hochleistungszelleinheit. Mit anderen Worten ausgedrückt, handelt es sich bei der ersten Zelleinheit bevorzugt um eine sogenannte high-energy-cell, auch he-cell genannt, während es sich bei der zweiten Zelleinheit bevorzugt um eine sogenannte high-power-cell, auch hp-cell genannt, handelt.

Hochleistungszelleinheiten sind kleiner als Hochenergiezelleinheiten und weisen eine höhere Leistungsdichte als Hochenergiezelleinheiten auf. Dafür ist die Energiedichte der Hochleistungszelleinheiten geringer als jene der Hochenergiezelleinheiten. Kommt die Batteriebaugruppe zum Beispiel in dem Energiespeicher des Antriebsstrangs von einem elektrisch betriebenen Kraftfahrzeug zum Einsatz, so ist die Batteriebaugruppe durch den Verbau einer Hochenergiezelleinheit sowie einer Hochleistungszelleinheit besser auf sich verändernde Beschleunigungen des elektrisch betriebenen Kraftfahrzeugs abgestimmt. Bei hohen Beschleunigungen kann für einen kurzen Zeitraum eine hohe Leistung durch die Hochleistungszelleinheit bereitgestellt werden, während die Hochenergiezelleinheit, über einen längeren Zeitraum, in welchem beispielsweise nur geringere Beschleunigungsschwankungen auftreten, zum Bereitstellen von Energie in der Lage ist.

Erfindungsgemäß weist die Batteriebaugruppe eine Vielzahl von identischen ersten Zelleinheiten und eine Vielzahl von identischen zweiten Zelleinheiten auf. Mit anderen Worten ausgedrückt, weist die Batteriebaugruppe bevorzugt eine Vielzahl von Hochenergiezelleinheiten und eine Vielzahl von Hochleistungszelleinheiten auf. Bei einer derartigen Ausführungsform kann der durch die Batteriebaugruppe zur Verfügung stellbare Spannungsbeziehungsweise Strombetrag in Abhängigkeit von der Anzahl an Hochenergiezelleinheiten und Hochleistungszelleinheiten erhöht und an die jeweils vorliegenden Anforderungen angepasst werden.

Vorzugsweise folgt jeweils abwechselnd eine erste Zelleinheit auf eine zweite Zelleinheit und eine zweite Zelleinheit auf eine erste Zelleinheit. In einer derartigen Ausführungsform ist der Bauraum innerhalb der Batteriebaugruppe gut ausgenutzt. Sind die ersten Zelleinheiten als Hochenergiezelleinheiten oder als Hochenergiezellen und die zweiten Zelleinheiten als Hochleistungszelleinheiten oder als Hochleistungszellen ausgeführt, so dienen bei einer wie oben beschriebenen Anordnung der ersten und zweiten Zelleinheiten die Hochenergiezelleinheiten beziehungsweise die Hochenergiezellen als thermische Puffer für die Hochleistungszelleinheiten beziehungsweise die Hochleistungszellen.

Bevorzugt sind die positiven oder die negativen Pole der ersten Zelleinheiten jeweils mit dem ersten Anschluss verbunden und/oder sind die positiven oder die negativen Pole der zweiten Zelleinheiten jeweils mit dem zweiten Anschluss verbunden. Ferner bevorzugt sind die ersten Zelleinheiten innerhalb der Batteriebaugruppe zueinander parallel geschaltet und/oder sind die zweiten Zelleinheiten innerhalb der Batteriebaugruppe zueinander parallel geschaltet. Dadurch können die ersten und die zweiten Zelleinheiten getrennt voneinander belastet werden. Sind die ersten Zelleinheiten beispielsweise als Hochenergiezellen und die zweiten Zelleinheiten beispielsweise als Hochleistungszellen ausgeführt und ist die Batteriebaugruppe innerhalb eines elektrisch betriebenen Kraftfahrzeugs verbaut, so kann der Strom zum Antrieb des elektrisch betriebenen Kraftfahrzeugs während einer Beschleunigung beispielsweise aus den Hochleistungszellen bezogen werden, während er bei einer Fahrt mit konstanter Geschwindigkeit aus den Hochenergiezellen bezogen werden kann. Durch die Parallelschaltungen ist der durch die jeweiligen Zelleinheiten beziehungsweise Batteriezellen bereitstellbare Strom stark erhöht.

Erfindungsgemäß sind die ersten Zelleinheiten in Reihe geschaltet und/oder sind die zweiten Zelleinheiten in Reihe geschaltet. Durch eine Reihenschaltung der ersten Zelleinheiten unter sich und eine dazu separate Reihenschaltung der zweiten Zelleinheiten unter sich, innerhalb der Batteriebaugruppe, ist die durch diese Reihenschaltungen bereitstellbare Spannung stark erhöht.

Bevorzugt ist die Batteriebaugruppe ein Batteriemodul und ist die erste Zelleinheit eine Hochenergie-Batteriezelle, wobei die zweite Zelleinheit eine Hochleistungs-Batteriezelle ist. Hochenergie- und Hochleistungs-Batteriezellen können sich voneinander zum Beispiel in der Art der Beschichtung und in der Art der Zusammensetzung der Aktivmaterialien der in den Batteriezellen verbauten Elektrodenensembles unterscheiden. Während Hochleistungs-Batteriezellen bei, im Vergleich zu Hochenergie-Batteriezellen, meist geringerem Bauvolumen eine höhere Leistungsdichte als Hochenergie-Batteriezellen aufweisen, weisen Hochenergie-Batteriezellen eine höhere Energiedichte als Hochleistungs-Batteriezellen auf. Somit können Hochenergie-Batteriezellen einen größeren Energiebetrag als Hochleistungs-Batteriezellen speichern, während Hochleistungs-Batteriezellen, zumindest für eine kurze Zeit, einen höheren Strom als Hochenergie-Batteriezellen bereitstellen können. Durch den Verbau von Hochenergie- und Hochleistungs-Batteriezellen ist die von dem Batteriemodul bereitstellbare Leistung beziehungsweise Energie besser an das Anforderungsprofil eines Kraftfahrzeugs angepasst. Konkret unterscheiden sich Hochleistungs- und Hochenergie-Batteriezellen, wie bereits erwähnt, in den in diesen verbauten Elektrodenensembles. Die in einer Hochleistungs-Batteriezelle verbauten Elektrodenensembles können eine andere Beschichtungsdicke, eine andere Verdichtung, ein anderes Verhältnis von Aktivmaterial zu Binder, ein anderes Leitmaterial und/oder ein anderes Aktivmaterial als eine Hochenergie-Batteriezelle aufweisen.

Erfindungsgemäß ist die Batteriebaugruppe eine Batteriezelle und ist die erste Zelleinheit ein erstes Elektrodenensemble, welches die Eigenschaften einer Hochenergiezelle aufweist und ist die zweite Zelleinheit ein zweites Elektrodenensemble, welches die Eigenschaften einer Hochleistungszelle aufweist. Mit anderen Worten ausgedrückt, ist die erste Zelleinheit bevorzugt ein Hochenergie-Elektrodenensemble und ist die zweite Zelleinheit bevorzugt ein Hochleistungs-Elektrodenensemble. Dabei weisen Hochenergie-Elektrodenensembles eine höhere Energiedichte als Hochleistungs-Elektrodenensembles auf, während Hochleistungs-Elektrodenensembles eine höhere Leistungsdichte als Hochenergie-Elektrodenensembles aufweisen. Hochenergie-Elektrodenensembles und Hochleistungs-Elektrodenensembles können sich dabei in der Beschichtungsdicke, in der Verdichtung, in dem Verhältnis von Aktivmaterial zu Binder, in der Art des verwandten Leitmaterials und/oder in der Art des verwandten Aktivmaterials voneinander unterscheiden.

Bevorzugt entspricht die Leistungsdichte der zweiten Zelleinheit mindestens dem 2-Fachen der Leistungsdichte der ersten Zelleinheit. Ferner bevorzugt entspricht die Leistungsdichte der zweiten Zelleinheit dem 2-Fachen bis 7,5-Fachen der Leistungsdichte der ersten Zelleinheit. Mit einer solchen zweiten Zelleinheit ist die Batteriebaugruppe besonders gut für den Verbau in einem elektrisch betriebenen Kraftfahrzeug geeignet, da während einer Beschleunigung desselben hohe Ströme, also eine hohe Leistung für einen kurzen Zeitraum benötigt werden.

Ferner bevorzugt entspricht die Energiedichte der ersten Zelleinheit dem 3-Fachen bis 10-Fachen der Energiedichte der zweiten Zelleinheit. Mit einer solchen ersten Zelleinheit ist die Batteriebaugruppe besonders gut für den Verbau in einem elektrisch betriebenen Kraftfahrzeug geeignet, da für die Überwindung einer großen Distanz ein hoher Energiebetrag speicherbar sein muss.

Des Weiteren bevorzugt ist sowohl die erste Zelleinheit als auch die zweite Zelleinheit als Lithium-Ionen-Zelleinheit ausgeführt. Lithium-Ionen-Zelleinheiten weisen allgemein eine hohe Energiedichte und eine hohe thermische Stabilität auf.

Ferner wird eine Batterie mit einer erfindungsgemäßen Batteriebaugruppe bereitgestellt, wobei die Batterie besonders bevorzugt als eine Lithium-Ionen-Batterie ausgeführt ist. Die Vorteile solcher Batterien sind unter anderem in ihrer vergleichsweise hohen Energiedichte sowie ihrer großen thermischen Stabilität gegeben. Ein weiterer Vorteil von Lithium-Ionen-Batterien ist, dass diese keinem Memory Effekt unterliegen.

Ferner wird ein Kraftfahrzeug mit einer Batterie mit einer erfindungsgemäßen Batteriebaugruppe bereitgestellt, wobei die Batterie mit einem Antriebssystem des Kraftfahrzeugs verbunden ist.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein schematisches Ausführungsbeispiel einer als Batteriemodul ausgeführten, erfindungsgemäßen Batteriebaugruppe, und
Figur 2 ein schematisches Ausführungsbeispiel eines Batteriemoduls mit mehreren, als Batteriezellen erfindungsgemäß ausgeführten Batteriebaugruppen.

### Ausführungsformen der Erfindung

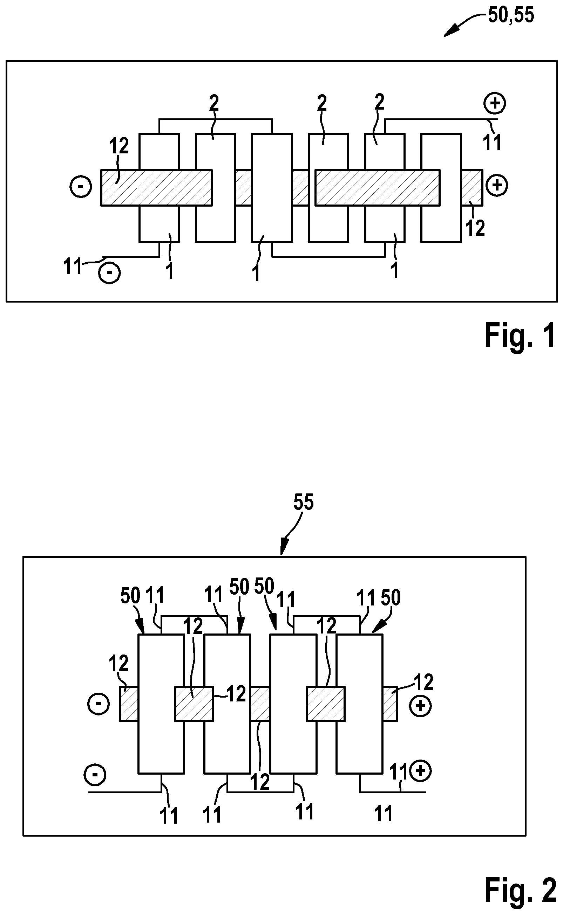

In der Figur 1 ist ein schematisches Ausführungsbeispiel einer als Batteriemodul 55 ausgeführten, erfindungsgemäßen Batteriebaugruppe 50 dargestellt. Die erfindungsgemäße Batteriebaugruppe 50 umfasst in diesem Ausführungsbeispiel rein beispielhaft eine Vielzahl von zueinander identischen ersten Zelleinheiten 1 einer ersten Zellenart und eine Vielzahl von zueinander identischen zweiten Zelleinheiten 2 einer zweiten Zellenart, welche sich von den ersten Zelleinheiten 1 der ersten Zellenart unterscheiden. Von den ersten und zweiten Zelleinheiten 1, 2 sind in Figur 1 lediglich jeweils drei schematisch dargestellt. Die wirkliche Anzahl an in dem Batteriemodul 55 verbauten ersten und zweiten Zelleinheiten 1, 2 ist wesentlich höher. Die ersten und zweiten Zelleinheiten 1, 2 sind in diesem Ausführungsbeispiel jeweils rein beispielhaft abwechselnd nebeneinander angeordnet, so dass jeweils eine erste Zelleinheit 1 auf eine zweite Zelleinheit 2 und eine zweite Zelleinheit 2 auf eine erste Zelleinheit 1 folgt. Es können allerdings auch andere erfindungsgemäße Batteriebaugruppen 50 ausgeführt sein, in welchen erste und zweite Zelleinheiten 1, 2 auf andere Art und Weise innerhalb eines Batteriemoduls 55 angeordnet sind. Ferner können ebenfalls erfindungsgemäße Batteriebaugruppen 50 ausgeführt sein, welche lediglich eine einzelne erste Zelleinheit 1 einer ersten Zellenart und lediglich eine einzelne zweite Zelleinheit 2 einer zweiten Zellenart aufweisen. In diesem Ausführungsbeispiel sind die ersten Zelleinheiten 1 rein beispielhaft innerhalb des Batteriemoduls 55 untereinander beziehungsweise zueinander in Reihe geschaltet. Aufgrund der abwechselnden Anordnung von ersten und zweiten Zelleinheiten 1, 2 ist mit anderen Worten ausgedrückt in diesem Ausführungsbeispiel der Minuspol der an zweiter Stelle von rechts angeordneten ersten Zelleinheit 1 rein beispielhaft mit dem Pluspol der an vierter Stelle von rechts angeordneten ersten Zelleinheit 1 elektrisch leitfähig verbunden. Der Minuspol der an vierter Stelle von rechts angeordneten ersten Zelleinheit 1 ist ferner rein beispielhaft mit dem Pluspol der an sechster Stelle von rechts aus betrachtet angeordneten ersten Zelleinheit 1 elektrisch leitfähig verbunden. In diesem Ausführungsbeispiel ist der Pluspol der an zweiter Stelle von rechts angeordneten ersten Zelleinheit 1 rein beispielhaft mit einem ersten ersten Anschluss 11 elektrisch leitfähig verbunden, während der Minuspol der an sechster Stelle von rechts aus betrachtet angeordneten ersten Zelleinheit 1 elektrisch leitfähig mit einem zweiten ersten Anschluss 11 verbunden ist.

In diesem Ausführungsbeispiel sind die zweiten Zelleinheiten 2 rein beispielhaft innerhalb des Batteriemoduls 55 untereinander in Reihe geschaltet. Aufgrund der abwechselnden Anordnung von ersten und zweiten Zelleinheiten 1, 2 ist mit anderen Worten ausgedrückt in diesem Ausführungsbeispiel der Minuspol der an erster Stelle von rechts angeordneten zweiten Zelleinheit 2 rein beispielhaft mit dem Pluspol der an dritter Stelle von rechts angeordneten zweiten Zelleinheit 2 elektrisch leitfähig verbunden. Der Minuspol der an dritter Stelle von rechts angeordneten zweiten Zelleinheit 2 ist ferner rein beispielhaft mit dem Pluspol der an fünfter Stelle von rechts aus betrachtet angeordneten zweiten Zelleinheit 2 elektrisch leitfähig verbunden. In diesem Ausführungsbeispiel ist der Pluspol der an erster Stelle von rechts angeordneten zweiten Zelleinheit 2 rein beispielhaft mit einem ersten zweiten Anschluss 12 elektrisch leitfähig verbunden, während der Minuspol der an fünfter Stelle von rechts aus betrachtet angeordneten zweiten Zelleinheit 2 elektrisch leitfähig mit einem zweiten zweiten Anschluss 12 verbunden ist. Mit anderen Worten ausgedrückt, weist die erfindungsgemäße Batteriebaugruppe 50 in diesem Ausführungsbeispiel rein beispielhaft vier Anschlüsse 11, 12 auf, zwei erste Anschlüsse 11 und zwei zweite Anschlüsse 12, wobei jeweils einer der ersten und jeweils einer der zweiten Anschlüsse 11, 12 positiv ist, während die jeweils verbleibenden Anschlüsse 11, 12 negativ sind. Es können allerdings auch erfindungsgemäße Batteriebaugruppen 50 mit nur zwei, nur drei oder aber auch mehr als vier Anschlüssen 11, 12 bereitgestellt werden, in welchen die ersten und/oder die zweiten Zelleinheiten 1, 2 auch anders, beispielsweise untereinander parallel verschaltet sein können.

In diesem Ausführungsbeispiel handelt es sich bei den ersten Zelleinheiten 1 rein beispielhaft um Hochenergiezelleinheiten, während es sich bei den zweiten Zelleinheiten 2 rein beispielhaft um Hochleistungszelleinheiten handelt. Genauer ausgedrückt handelt es sich bei den ersten Zelleinheiten 1 um Hochenergie-Batteriezellen und bei den zweiten Zelleinheiten 2 um Hochleistungs-Batteriezellen. Sowohl bei den Hochenergie-Batteriezellen als auch bei den Hochleistungs-Batteriezellen handelt es sich in diesem Ausführungsbeispiel rein beispielhaft um Lithium-Ionen-Batteriezellen. In diesem Ausführungsbeispiel weisen die Hochleistungs-Batteriezellen rein beispielhaft jeweils eine Kapazität von 5 bis 6 Ah auf und sind die Hochleistungs-Batteriezellen dazu ausgebildet, einen Strom von 200 A bereitzustellen. In diesem Ausführungsbeispiel weisen die Hochenergie-Batteriezellen rein beispielhaft jeweils die 3-fache Energiedichte einer der verbauten Hochleistungs-Batteriezellen auf. In diesem Ausführungsbeispiel liegt die Kapazität der Hochenergie-Batteriezellen rein beispielhaft bei ca. 15 bis 18 Ah. Ferner weisen die Hochenergie-Batteriezellen jeweils rein beispielhaft lediglich die Hälfte der Leistungsdichte einer der verbauten Hochleistungs-Batteriezellen auf. In diesem Ausführungsbeispiel vermögen die Hochenergie-Batteriezellen jeweils rein beispielhaft lediglich einen Strom von 100 A bereitzustellen. Es können allerdings auch erfindungsgemäße Batteriebaugruppen 50 realisiert sein, in welchen die ersten und zweiten Zelleinheiten 1, 2 andere als die vorhergehend erwähnten Energiedichteverhältnisse zueinander beziehungsweise andere als die vorhergehend erwähnten Leistungsdichteverhältnisse zueinander aufweisen. Beispielsweise kann die Energiedichte der Hochenergie-Batteriezellen 10-mal höher sein als die Energiedichte der Hochleistungs-Batteriezellen. Andererseits kann die Leistungsdichte der Hochleistungs-Batteriezellen beispielsweise auch geringer oder höher als zweimal so hoch wie die Leistungsdichte der Hochenergie-Batteriezellen sein.

In diesem Ausführungsbeispiel unterscheiden sich Hochenergie- und Hochleistungs-Batteriezellen rein beispielhaft in der Ausgestaltung der in den Hochenergie- und Hochleistungs-Batteriezellen verbauten beziehungsweise verwandten Aktivmaterialien. Genauer ausgedrückt, unterscheiden sich die Hochenergie- und Hochleistungs-Batteriezellen in der Ausführung der Anoden- und Kathodenmassen der in den jeweiligen Batteriezellen verbauten Elektrodenensembles voneinander.

Die Figur 2 zeigt ein schematisches Ausführungsbeispiel eines Batteriemoduls 55 mit mehreren, als Batteriezellen erfindungsgemäß ausgeführten Batteriebaugruppen 50. Mit anderen Worten ausgedrückt, zeigt die Figur 2 ein Batteriemodul 55, in welchem eine Vielzahl erfindungsgemäßer Batteriebaugruppen 50 verbaut ist, welche als Batteriezellen ausgeführt sind. Jede dieser als Batteriezellen ausgeführten Batteriebaugruppen 50 umfasst mindestens zwei Elektrodenensembles beziehungsweise zwei Elektrodenverbünde, von denen eines eine erste Zelleinheit 1 und ein anderes eine zweite, von der ersten Zelleinheit 1 verschiedene Zelleinheit 2 ist beziehungsweise darstellt. Die erste Zelleinheit 1 gehört also einer ersten Zellenart an, während die zweite Zelleinheit 2 einer zweiten, von der ersten Zellenart verschiedenen Zellenart angehört. Bei der ersten Zelleinheit 1 handelt es sich in diesem Ausführungsbeispiel rein beispielhaft um ein Hochenergie-Elektrodenensemble, also um ein Elektrodenensemble, welches aufgrund seiner Energiedichte und seiner Leistungsdichte die Eigenschaften einer Hochenergiezelle aufweist. Bei der zweiten Zelleinheit 2 handelt es sich in diesem Ausführungsbeispiel rein beispielhaft um ein Hochleistungs-Elektrodenensemble, also um ein Elektrodenensemble, welches aufgrund seiner Energiedichte und seiner Leistungsdichte die Eigenschaften einer Hochleistungszelle aufweist. Die Energiedichte des Hochenergie-Elektrodenensembles ist in diesem Ausführungsbeispiel rein beispielhaft 4-mal so hoch wie die Energiedichte des Hochleistungs-Elektrodenensembles. Allerdings ist die Leistungsdichte des Hochleistungs-Elektrodenensembles in diesem Ausführungsbeispiel rein beispielhaft 3-mal so hoch wie die Leistungsdichte des Hochenergie-Elektrodenensembles.

In diesem Ausführungsbeispiel weist jede der Batteriezellen rein beispielhaft jeweils zwei erste elektrisch leitfähige Anschlüsse 11 und zwei zweite elektrisch leitfähige Anschlüsse 12 auf. Innerhalb der Batteriezellen ist jeweils ein erster Anschluss 11 mit dem positiven Pol des jeweiligen Hochenergie-Elektrodenensembles elektrisch leitfähig verbunden, während der verbleibende erste Anschluss 11 mit dem negativen Pol des jeweiligen Hochenergie-Elektrodenensembles elektrisch leitfähig verbunden ist. Ferner ist innerhalb der Batteriezellen jeweils ein zweiter Anschluss 12 mit dem positiven Pol des jeweiligen Hochleistungs-Elektrodenensembles elektrisch leitfähig verbunden, während der verbleibende zweite Anschluss 12 mit dem negativen Pol des jeweiligen Hochleistungs-Elektrodenensembles elektrisch leitfähig verbunden ist. Mit anderen Worten ausgedrückt, sind je Batteriezelle die ersten Anschlüsse 11 mit jeweils einem der Pole der jeweiligen Hochenergie-Elektrodenensembles elektrisch leitfähig verbunden, während je Batteriezelle die zweiten Anschlüsse 12 mit jeweils einem der Pole der jeweiligen Hochleistungs-Elektrodenensembles elektrisch leitfähig verbunden sind.

Innerhalb des Batteriemoduls 55 sind die ersten Anschlüsse 11 der Batteriezellen jeweils so miteinander verbunden, dass die Hochenergie-Elektrodenensembles aller Batteriezellen miteinander in Reihe geschaltet sind. Separat dazu sind die zweiten Anschlüsse 12 der Batteriezellen jeweils so miteinander elektrisch leitfähig verbunden, dass die Hochleistungs-Elektrodenensembles aller Batteriezellen miteinander in Reihe geschaltet sind. Mit anderen Worten ausgedrückt, ist beispielsweise der erste, mit dem Minuspol des Hochenergie-Elektrodenensembles verbundene Anschluss 11 der ersten Batteriezelle von rechts aus betrachtet mit dem ersten, mit dem Pluspol des Hochenergie-Elektrodenensembles verbundenen Anschluss 11 der zweiten Batteriezelle von rechts aus betrachtet elektrisch leitfähig verbunden. Auf diese Weise ist jeweils ein erster Anschluss 11 einer n-ten Batteriezelle mit dem (n+1)-ten ersten Anschluss 11 einer weiteren, zu der n-ten Batteriezelle benachbarten Batteriezelle elektrisch leitfähig verbunden, wobei sich jeweils die Polung des ersten Anschlusses 11 der n-ten Batteriezelle von der Polung des mit diesem verbundenen ersten Anschluss 11 der (n+1)-Batteriezelle unterscheidet. Ferner ist der erste, mit dem Pluspol des Hochenergie-Elektrodenensembles verbundene Anschluss 11 der ersten Batteriezelle von rechts aus betrachtet rein beispielhaft mit einer Last verbindbar. Ebenso ist der erste, mit dem Minuspol des Hochenergie-Elektrodenensembles verbundene Anschluss 11 der vierten Batteriezelle von rechts aus betrachtet mit einer Last verbindbar. Analog zu dieser Verbindung der ersten Anschlüsse 11 untereinander und jeweils innerhalb der Batteriezellen mit den Polen der Hochenergie-Elektrodenensembles erfolgt die Verschaltung der Hochleistungs-Elektrodenensembles mit den jeweils beiden zweiten Anschlüssen 12 der Batteriezellen und den zweiten Anschlüssen 12 aller Batteriezellen untereinander. So ist beispielsweise der mit dem Minuspol des Hochleistungs-Elektrodenensembles der ersten Batteriezelle von rechts aus betrachtet verbundene zweite Anschluss 12 mit demjenigen zweiten Anschluss 12 der zweiten von rechts aus betrachteten Batteriezelle verbunden, welcher seinerseits elektrisch leitfähig mit dem Pluspol des Hochleistungs-Elektrodenensembles der zweiten Batteriezelle elektrisch leitfähig verbunden ist. Der mit dem Pluspol des Hochleistungs-Elektrodenensembles der ersten Batteriezelle von rechts aus betrachtete zweite Anschluss 12 ist mit einer Last verbindbar. Ferner ist der mit dem Minuspol des Hochleistungs-Elektrodenensembles der vierten Batteriezelle von rechts aus betrachtete zweite Anschluss 12 mit einer Last verbindbar. Zum besseren Verständnis sind sowohl in Figur 1 als auch in Figur 2 die Polungen der jeweils mit einer Last verbindbaren ersten und zweiten Anschlüsse 11, 12 eingezeichnet.

Ist das Batteriemodul 55 mit den als Batteriezellen ausgeführten Batteriebaugruppen 50 mit einer Last verbunden, kann diese also je nach Anforderungsprofil Energie aus den Hochenergie-Elektrodenensembles und/oder aus den Hochleistungs-Elektrodenensembles des Batteriemoduls 55 beziehen. In diesem Ausführungsbeispiel unterscheiden sich die Hochenergie-Elektrodenensembles sowie die Hochleistungs-Elektrodenensembles rein beispielhaft in der chemischen beziehungsweise physikalischen Ausgestaltung der für die Realisierung der jeweiligen Elektrodenensembles verwandten beziehungsweise verbauten Aktivmaterialien.

Es können allerdings auch andere erfindungsgemäße Batteriebaugruppen 50 als die vorhergehend beschriebenen ausgeführt werden. Beispielsweise können als Starterbatterie fungierende, erfindungsgemäße Batteriebaugruppen 50 realisiert sein, welche beispielsweise drei erste in Reihe geschaltete und als Hochenergiezellen ausgeführte Zelleinheiten 1 mit einer Kapazität von jeweils 40 Ah aufweisen und welche beispielsweise drei zweite in Reihe geschaltete und als Hochleistungszellen ausgeführte Zelleinheiten 2 mit einer Kapazität von jeweils 5,9 Ah aufweisen. Ist eine solche Batteriebaugruppe 50 beispielsweise in einem elektrisch betriebenen Kraftfahrzeug verbaut, vermögen die Hochleistungszellen bei Vorliegen eines hohen Strombedarfs, wie beispielsweise im Falle eines Kaltstarts gegeben, einen hohen Strom zur Verfügung zu stellen. Im Anschluss daran werden die teilweise oder vollständig entladenen Hochleistungszellen durch die Hochenergiezellen gestützt und wieder aufgeladen, um kurz danach bereits einen weiteren Startvorgang des Kraftfahrzeugs ermöglichen zu können. Im Gegensatz dazu wird beispielsweise Strom für Standlicht aus den Hochenergiezellen entnommen. Somit ist auch, wenn die Hochenergiezellen vollständig entleert sind, über die Hochleistungszellen immer noch ein Kaltstart möglich.

## Patentansprüche

1. Batteriezelle (50), umfassend,
- ein Vielzahl von identischen ersten Elektrodenensembles (1),
- zwei erste Anschlüsse (11), wobei ein erster erster Anschluss (11) elektrisch leitfähig mit einem positiven Pol eines der ersten Elektrodenensembles (1) verbunden ist und ein zweiter erster Anschluss (11) elektrisch leitfähig mit einem negativen Pol eines der ersten Elektrodenensembles (1) verbunden ist,
- eine Vielzahl von identischen zweiten Elektrodenensembles (2), welche von den ersten Elektrodenensembles (1) verschieden sind,
- zwei zweite Anschlüsse (12), wobei ein erster zweiter Anschluss (12) elektrisch leitfähig mit einem positiven Pol eines der zweiten Elektrodenensembles (2) verbunden ist und ein zweiter zweiter Anschluss (12) elektrisch leitfähig mit einem negativen Pol eines der zweiten Elektrodenensembles (2) verbunden ist,
wobei die ersten Elektrodenensembles (1) jeweils Hochenergie-Elektrodenensembles sind und die zweiten Elektrodenensembles (2) jeweils Hochleistungs-Elektrodenensembles sind, wobei
die ersten Elektrodenensembles (1) jeweils eine höhere Energiedichte aufweisen als die zweiten Elektrodenensembles (2) und
die zweiten Elektrodenensembles (2) jeweils eine höhere Leistungsdichte aufweisen als die ersten Elektrodenensembles (1), **dadurch gekennzeichnet, dass**
die ersten Elektrodenensembles (1) in Reihe geschaltet sind und/oder dass die zweiten Elektrodenensembles (2) in Reihe geschaltet sind.

2. Batteriezelle (50) nach Anspruch 1, wobei jeweils abwechselnd ein erstes Elektrodenensemble (1) auf ein zweites Elektrodenensemble (2) und ein zweites Elektrodenensemble (2) auf ein erstes Elektrodenensemble (1) folgt.

3. Batteriezelle (50) nach einem der vorhergehenden Ansprüche, wobei die Leistungsdichte der zweiten Elektrodenensembles (2) mindestens dem 2-Fachen der Leistungsdichte der ersten Elektrodenensembles (1) entspricht.

4. Batteriezelle (50) nach einem der vorhergehenden Ansprüche, wobei die Energiedichte er ersten Elektrodenensembles (1) mindestens dem 3-Fachen der Energiedichte der zweiten Elektrodenensembles (2) entspricht.

5. Batterie (60) mit einer Batteriezelle (50) nach einem der Ansprüche 1 bis 4.

6. Kraftfahrzeug mit einer Batterie (60) nach Anspruch 5, wobei die Batterie (60) mit einem Antriebssystem des Kraftfahrzeugs verbunden ist.

## Claims

1. Battery cell (50), comprising
- a large number of identical first electrode assemblies (1),
- two first connections (11), wherein a first first connection (11) is electrically conductively connected to a positive pole of one of the first electrode assemblies (1), and a second first connection (11) is electrically conductively connected to a negative pole of one of the first electrode assemblies (1),
- a large number of identical second electrode assemblies (2) which are different from the first electrode assemblies (1),
- two second connections (12), wherein a first second connection (12) is electrically conductively connected to a positive pole of one of the second electrode assemblies (2), and a second second connection (12) is electrically conductively connected to a negative pole of one of the second electrode assemblies (2),
wherein the first electrode assemblies (1) are each high-energy electrode assemblies, and the second electrode assemblies (2) are each high-power electrode assemblies, wherein
the first electrode assemblies (1) each have a higher energy density than the second electrode assemblies (2), and
the second electrode assemblies (2) each have a higher power density than the first electrode assemblies (1), **characterized in that**
the first electrode assemblies (1) are connected in series, and/or **in that** the second electrode assemblies (2) are connected in series.

2. Battery cell (50) according to Claim 1, wherein, in each case alternately, a first electrode assembly (1) follows a second electrode assembly (2), and a second electrode assembly (2) follows a first electrode assembly (1).

3. Battery cell (50) according to either of the preceding claims, wherein the power density of the second electrode assemblies (2) corresponds at least to' 2 times the power density of the first electrode assemblies (1).

4. Battery cell (50) according to one of the preceding claims, wherein the energy density of the first electrode assemblies (1) corresponds at least to 3 times the energy density of the second electrode assemblies (2).

5. Battery (60) having a battery cell (50) according to one of Claims 1 to 4.

6. Motor vehicle having a battery (60) according to Claim 5, wherein the battery (60) is connected to a drive system of the motor vehicle.

## Revendications

1. Elément de batterie (50), comprenant
- une pluralité de premiers ensembles d'électrodes identiques (1),
- deux premières bornes (11), dans lequel une première première borne (11) est reliée de manière électriquement conductrice à un pôle positif de l'un des premiers ensembles d'électrodes (1) et une deuxième première borne (11) est reliée de manière électriquement conductrice à un pôle négatif de l'un des premiers ensembles d'électrodes (1),
- une pluralité de deuxièmes ensembles d'électrodes identiques (2), qui sont différents des premiers ensembles d'électrodes (1),
- deux deuxièmes bornes (12), dans lequel une première deuxième borne (12) est reliée de manière électriquement conductrice à un pôle positif de l'un des deuxièmes ensembles d'électrodes (2) et une deuxième deuxième borne (12) est reliée de manière électriquement conductrice à un pôle négatif de l'un des deuxièmes ensembles d'électrodes (2),
dans lequel les premiers ensembles d'électrodes (1) sont respectivement des ensembles d'électrodes à haute énergie et les deuxièmes ensembles d'électrodes (2) sont respectivement des ensembles d'électrodes de forte puissance, dans lequel
les premiers ensembles d'électrodes (1) présentent respectivement une densité d'énergie plus élevée que les deuxièmes ensembles d'électrodes (2) et les deuxièmes ensembles d'électrodes (2) présentent respectivement une densité de puissance plus élevée que les premiers ensembles d'électrodes (1),
**caractérisé en ce que** les premiers ensembles d'électrodes (1) sont connectés en série et/ou **en ce que** les deuxièmes ensembles d'électrodes (2) sont connectés en série.

2. Elément de batterie (50) selon la revendication 1, dans lequel, de manière respectivement alternée, un premier ensemble d'électrodes (1) suit un deuxième ensemble d'électrodes (2) et un deuxième ensemble d'électrodes (2) suit un premier ensemble d'électrodes (1).

3. Elément de batterie (50) selon l'une quelconque des revendications précédentes, dans lequel la densité de puissance du deuxième ensemble d'électrodes (2) correspond au moins à deux fois la densité de puissance du premier ensemble d'électrodes (1).

4. Elément de batterie (50) selon l'une quelconque des revendications précédentes, dans lequel la densité d'énergie du premier ensemble d'électrodes (1) correspond au moins à trois fois la densité d'énergie du deuxième ensemble d'électrodes (2).

5. Batterie (60) comportant un élément de batterie (50) selon l'une quelconque des revendications 1 à 4.

6. Véhicule automobile comportant une batterie (60) selon la revendication 5, dans lequel la batterie (60) est reliée à un système de propulsion du véhicule automobile.
